# EUROPÄISCHE PATENTANMELDUNG

(11) **EP 1 229 345 A2**
(43) Veröffentlichungstag der Anmeldung: **07.08.2002**
(21) Anmeldenummer: 02000925.4
(22) Anmeldetag: 16.01.2002
(51) Int. Cl.: G01S 5/14, E02F 9/24

(54) **System zur Bestimmung der Position von Baufahrzeugen oder Geräten mit einem Werkzeug zur Bodenbewegung**

(30) Priorität: 23.01.2001 DE 10102941; 05.05.2001 DE 10121955
(71) Anmelder: RUHRGAS AKTIENGESELLSCHAFT, 45138 Essen (DE)
(72) Erfinder: Beckervordersandtforth, Christian, Prof. Dr., 42555 Velbert (DE); Hoppe, Manfred, Dr.-Ing., 46284 Dorsten (DE); Loef, Peter, Dipl.-Ing., 45481 Mühlheim (DE)
(74) Vertreter: Harlacher, Mechthild, Dipl.-Ing.

(57) **Zusammenfassung**

Die Erfindung betrifft ein System zum Bestimmen der Position von Baufahrzeugen oder Geräten mit einem Werkzeug zur Bodenbewegung, insbesondere von Baggern.

Erfindungsgemäß ist ein Computer (1) gekoppelt mit
- einer Empfangseinheit (2), die eine Antenne (3) aufweist, zum Empfangen und Auswerten von Funksignalen mindestens eines Navigations-Satellitensystems zur Bestimmung der Position des Baufahrzeugs,
- einer Übernahmeeinheit (5) zur Übernahme von Informationen über die Lage von erdverlegten Leitungen oder dergl. und
- einem Anzeigeelement zur Anzeige der Position des Baufahrzeugs und der Informationen über die Lage von erdverlegten Leitungen.

## Beschreibung

Die Erfindung betrifft ein System zum Bestimmen der Position von Baufahrzeugen oder Geräten mit einem Werkzeug zur Bodenbewegung, insbesondere von Baggern.

Tiefbauarbeiten in der Nähe von erdverlegten Leitungen oder dergl. beispielsweise Kabeln, sind mit einem hohen Beschädigungsrisiko für die Leitungen verbunden, da einerseits die erdverlegten Leitung nicht zu sehen und anderseits die Position des Baufahrzeugs in bezug auf die Leitung nicht bekannt ist. Schäden, insbesondere an Gasleitungen können zu gravierenden Folgeschäden führen.

Die Aufgabe der Erfindung besteht demgemäss darin, ein System zum Bestimmen der Position von Baufahrzeugen oder Geräten mit einem Werkzeug zur Bodenbewegung, zu schaffen, um die Schadensrisiken bei Tiefbauarbeiten in der Nähe von erdverlegten Leitungen zu verringern.

Diese Aufgabe wird bei einem erfindungsgemäßen System dadurch gelöst, dass ein Computer gekoppelt ist mit
einer Empfangseinheit, die eine Antenne aufweist, zum Empfangen und Auswerten von Funksignalen mindestens eines Navigations-Satellitensystems zur Bestimmung der Position des Baufahrzeugs,
einer Übernahmeeinheit zur Übernahme von Informationen über die Lage von erdverlegten Leitungen oder dergl. und
einem Anzeigeelement zur Anzeige der Position des Baufahrzeugs und der Informationen über die Lage der Leitungen.

Diese Lösung hat den Vorteil, dass der Führer eines Baufahrzeugs oder der Bediener eines Gerätes mit einem Werkzeug zur Bodenbewegung in die Lage versetzt wird, die eigene Position relativ zur Lage einer gefährdeten Leitung zu beobachten und damit den Einsatz des Baufahrzeuges bzw. des Gerätes zur Bodenbewegung so zu steuern, dass die Leitung bei Bodenbewegungen nicht beschädigt wird. Somit werden Schäden an der erdverlegten Leitung wirksam verhindert.

Als Navigationssatelliten-System, auch GNSS (Globale Navigation Satellite System) genannt, stehen derzeit das amerikanische GPS und das russische GLONASS-System zur Verfügung.

Das Empfangen und Auswerten von Funksignalen eines Navigations-Satellitensystems zur Bestimmung der Position des Baufahrzeugs liefert ausreichende Ergebnisse. Die Zuverlässigkeit und Genauigkeit der Positionsbestimmung lassen sich durch gleichzeitigen Empfang und Auswertung von Signalen von zwei Navigations-Satellitensystemen steigern.

Vorzugsweise ist die Übernahmeeinheit zur Übernahme von auf einem mobilen Datenträger gespeicherten Informationen über die Lage von erdverlegten Leitungen eingerichtet.

Alternativ dazu ist die Übernahmeeinheit zur Übernahme von Informationen über die Lage von erdverlegten Leitungen per Funk, beispielsweise einem leistungsfähigen Datenfunk wie UMTS, eingerichtet.

Eine wesentliche Weiterbildung des Systems nach der Erfindung besteht darin, dass die Empfangseinrichtung zum Empfangen und Auswerten von Funksignalen zum Empfangen von Korrektursignalen vorzugsweise von stationären Referenzstationen eingerichtet ist. Es handelt sich um ein sogenanntes Differential-System. Die Übertragung der Korrekturdaten kann über GSM-Mobilfunk, über Radiofrequenzen oder ein lokales Funknetz erfolgen. Mittels eines derartigen Systems kann die Genauigkeit der Positions-Bestimmung je nach dem gewählten Algorithmus der Positionsermittlung und der Entfernung der Basisstation auf besser als 10 cm gesteigert werden.

Vorzugsweise weist das System ein Bauelement auf, welches die Relativposition des Werkzeuges zur Bodenbewegung in bezug auf die Position der Antenne der Empfangseinheit zum Empfangen und Auswerten der Funksignale des Navigations-Satellitensystems bestimmt.

Vorzugsweise weist der Computer eine Auswerteeinheit auf, die die Position des Baufahrzeugs oder des Werkzeugs zur Bodenbewegung mit den Informationen über die Lage erdverlegter Leitungen vergleicht und die beim Unterschreiten eines Grenzwertes des Abstands des Baufahrzeugs zu einer Leitung ein Warnsignal oder ein Signal zum Auslösen eines Wamsignals erzeugt.

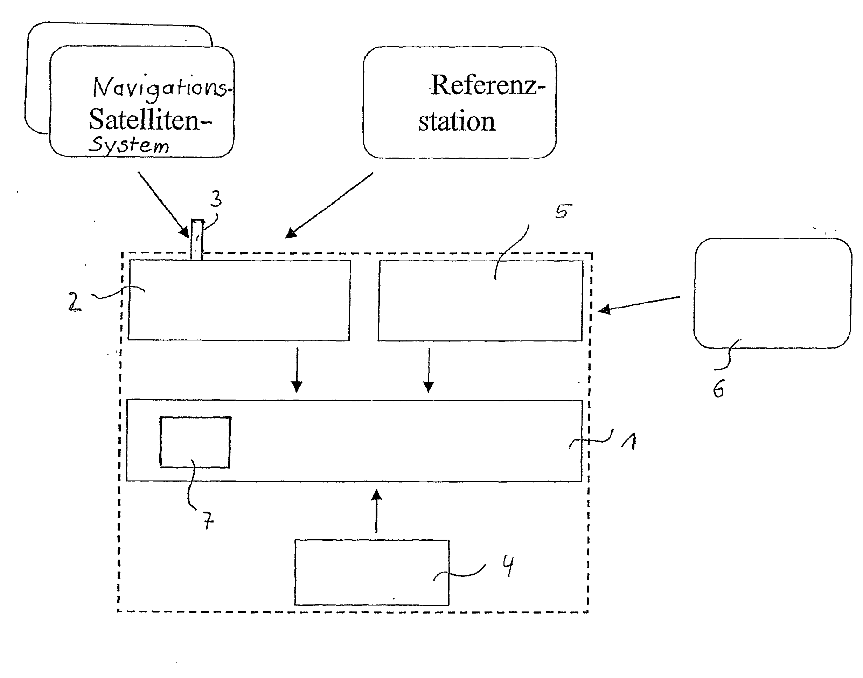

Die Erfindung wird im folgenden anhand eines bevorzugten Ausführungsbeispiels des erfindungsgemäßen Systems im Zusammenhang mit der Zeichnung näher erläutert.

Die Zeichnung zeigt die wesentlichen Komponenten des erfindungsgemäßen Systems zum Bestimmen der Position eines Baufahrzeugs oder dergl. in schematischer Darstellung.

Das System, das insbesondere für den Einsatz in Baggern geeignet ist, weist einen Computer 1 auf, der als Feldcomputer ausgebildet und für den Einsatz auf Baustellen geeignet ist.

Dieser Computer ist auf bekannte Art und Weise über eine Schnittstelle mit einer Empfangseinheit 2 gekoppelt, welche eine Antenne 3 aufweist. Die Empfangseinheit 2 dient zum Empfangen und Auswerten von Funksignalen zur Bestimmung der Position des Baggers. Die Empfangseinheit ist zum gleichzeitigen Empfangen und gleichzeitigen Auswerten der Signale von zwei Navigations-Satellitensystemen geeignet. Außerdem ist die Empfangseinheit 2 zum Empfangen von Korrekturfunksignalen von stationären Basisstationen, sogenannten Referenzstationen ausgebildet. Die Übertragung der Korrekturdaten erfolgt beispielsweise über ein lokales Funknetz . Mittels eines derartigen Systems kann die Genauigkeit der Positions-Bestimmung je nach dem gewählten Algorithmus der Positionsermittlung und der Entfernung der Basisstation auf besser als 10 cm gesteigert werden.

Die Positionsbestimmung mittels Funksignalen eines Navigations-Satellitensystems bezieht sich auf die jeweilige Position der Antenne, die man beispielsweise auf dem Kabinendach des Baggers montieren kann. Die Gefahr für die Leitung geht jedoch von dem Werkzeug zur Bodenbewegung aus. Bei dem Werkzeug handelt es sich beispielsweise um eine bewegliche Baggerschaufel, die sich in der Auslegerstellung um mehrere Meter horizontal und vertikal von der Kabine des Baggers entfernen kann.

Das System beinhaltet daher ein Element 4, welches die Relativposition des Werkzeuges zur Bodenbewegung in bezug auf die Position der Antenne berechnet. Derartige Elemente, z. B. Drehwinkelgeber an den Auslegergelenken, sind an sich bekannt und werden als Bestandteil von Maschinensteuerung zum automatischen Herstellen von Böschungswinkeln eingesetzt.

Der Computer 1 ist weiterhin auf bekannte Art und Weise mit einer Übernahmeeinheit 5 zur Übernahme von Informationen über die Lage von erdverlegten Leitungen oder dergl. insbesondere Kabel verbunden. Bei den meisten Versorgungsunternehmen sind die Pläne von Leitungsnetzen in digitaler Form gespeichert. Die Daten können daher auch auf mobilen und austauschbaren Datenträgern, insbesondere auf CDs zur Verfügung gestellt werden. Die Übernahmeeinheit 5 ist zur Aufnahme eines derartiger austauschbaren Datenträgers 6 mit Informationen aus der zentralen Dokumentation eines Versorgungsunternehmens geeignet. Die Informationen von dem Datenträger 6 werden im Computer 1 gespeichert.

In der Kabine des Baufahrzeugs befindet sich ein nicht dargestelltes an sich bekanntes Anzeigeelement, das die Position des Werkzeugs für die Bodenbewegung oder die Position des Baufahrzeugs in bezug auf die Lage der erdverlegten Leitung visualisiert. Dies kann beispielsweise die Darstellung des Ausschnittes eines Leitungsplans sein, in der die Position des Baufahrzeuges grafisch dargestellt ist. Der Baggerführer wird somit in die Lage versetzt, seine eigene Position relativ zu der durch seine Tätigkeit potentiell gefährdete Leitung zu beobachten und somit die Bodenbewegungen so durchzuführen, dass keine Schäden an den erdverlegten Leitungen entstehen.

Der Computer weist zusätzlich eine Auswerteeinheit 7 auf, die die Position des Baufahrzeugs mit den Lageinformationen vergleicht und die beim Überschreiten eines Abstands-Grenzwertes ein Warnsignal erzeugt bzw. auslöst. Es kann sich um ein optisches oder akustisches Warnsignal handeln.

Im Rahmen der Erfindung sind ohne weiteres Abwandlungsmöglichkeiten gegeben. So kann die Übernahmeeinheit zur Übernahme von Informationen über die Lage von erdverlegten Leitungen per Funk, beispielsweise UMTS eingerichtet sein.

## Patentansprüche

1. System zum Bestimmen der Position von Baufahrzeugen oder Geräte mit einem Werkzeug zur Bodenbewegung, insbesondere von Baggern,
**dadurch gekennzeichnet,**
**dass** ein Computer (1) gekoppelt ist mit
- einer Empfangseinheit (2), die eine Antenne (3) aufweist, zum Empfangen und Auswerten von Funksignalen mindestens eines Navigations-Satellitensystems zur Bestimmung der Position des Baufahrzeugs,
- einer Übernahmeeinheit (5) zur Übernahme von Informationen über die Lage von erdverlegten Leitungen oder dergl. und
- einem Anzeigeelement zur Anzeige der Position des Baufahrzeugs und der Informationen über die Lage von erdverlegten Leitungen.

2. System nach Anspruch 1,
**dadurch gekennzeichnet,**
**dass** die Übernahmeeinheit (5) zur Übernahme von auf einem mobilen Datenträger gespeicherten Informationen über die Lage von erdverlegten Leitungen eingerichtet ist.

3. System nach Anspruch 1,
**dadurch gekennzeichnet,**
**dass** die Übernahmeeinheit (5) zur Übernahme von Informationen über die Lage von erdverlegten Leitungen per Funk eingerichtet ist.

4. System nach einem der Ansprüche 1 bis 3,
**dadurch gekennzeichnet,**
**dass** die Empfangseinrichtung (2) zum Empfangen von Korrektursignalen, vorzugsweise von stationären Basisstationen, zur Bestimmung der Position des Baufahrzeugs eingerichtet ist.

5. System nach einem der Ansprüche 1 bis 4,
**gekennzeichnet durch** ein Element (4), welches die Relativposition des Werkzeuges zur Bodenbewegung in bezug auf die Position der Antenne der Empfangseinheit zum Empfangen und Auswerten der Signale des Navigations-Satellitensystems bestimmt.

6. System nach einem der Ansprüche 1 bis 5,
**dadurch gekennzeichnet,**
**dass** der Computer eine Auswerteeinheit (7) aufweist, die die Position des Baufahrzeugs oder des Werkzeugs zur Bodenbearbeitung mit den Informationen über die Lage der erdverlegten Leitungen vergleicht und bei Unterschreiten eines Grenzwertes des Abstands des Baufahrfahrzeug oder des Werkzeugs zu einer Leitung ein Warnsignal erzeugt.
